Europäisches Patentamt

European Patent Office

Office européen des brevets

(11) Publication number: **0 159 098 B1**

# EUROPEAN PATENT SPECIFICATION

(45) Date of publication of patent specification: **02.01.92** (51) Int. Cl.⁵: **A01C  17/00**, A01C 15/00

(21) Application number: **85200576.8**

(22) Date of filing: **16.04.85**

(54) **A spreading device.**

(30) Priority: **18.04.84 NL 8401250**
**21.05.84 NL 8401620**

(43) Date of publication of application:
**23.10.85 Bulletin  85/43**

(45) Publication of the grant of the patent:
**02.01.92 Bulletin  92/01**

(84) Designated Contracting States:
**AT BE CH GB IT LI NL**

(56) References cited:
**EP-A- 0 074 155       EP-A- 0 081 257**
**EP-A- 0 127 922       DE-A- 2 652 914**
**DE-B- 1 180 562       FR-A- 2 383 591**
**FR-A- 2 388 479       GB-A- 2 058 533**
**US-A- 4 019 753**

(73) Proprietor: **C. van der Lely N.V.**
**Weverskade 10 P.O. Box 26**
**NL-3155 ZG Maasland(NL)**

(72) Inventor: **Van der Lely, Cornelis**
**7 Brüschenrain**
**Zug(CH)**

(74) Representative: **Mulder, Herman et al**
**Octrooibureau Van der Lely N.V. Weverskade**
**10 P.O. Box 26**
**NL-3155 ZG Maasland(NL)**

Rank Xerox (UK) Business Services

## Description

This invention relates to a spreading device, hereafter known as a spreader, for spreading material on a surface and a method of adjusting the orientation of the spreader. The spreader comprising a frame and at least one distribution member which is movable about an upwardly extending rotary axis, the frame being provided with at least one fastening member for connecting the spreader to a prime mover and at least part of the fastening member being displaceable upwardly and downwardly with respect to the frame for disposition in either one of at least two different positions with respect to the frame, whereby the distribution member is movable, by displacement of at least the part of the fastening member, into its position with respect to the surface to be covered by material spread by the spreader.

Spreaders of this kind are known from the DE-A-2 652 914. With the known construction the distribution member can be held parallel to the surface of the ground.

According to a construction mentioned in the EP-A-0 127 922, which document is relevant in respect of Article 54(3) of the EPC, the distribution member can be brought in a position in which it is inclined with respect to the surface to be covered by spreadable material. The inclined position can be used to distribute material uniformly at a peripheral strip of a surface to be covered.

According to the present invention, the spreader is characterized in that the distribution member is movable into a position in which it is inclined with respect to the surface to be covered with material to be spread by the spreader, and in that the part of the fastening member is restrictable in its upward movement relative to the frame by bearing against a locking element mounted to the spreader so as to be movable with respect to the frame and to cooperate with the part of the fastening member for establishing at least one position of the fastening member with respect to the frame and in that the frame is provided with a foot on which the spreader can be supported at least partly by the ground, so that the part of the fastening member is no longer bearing against the locking element so that the locking element can be withdrawn from its cooperation with the part of the fastening member or can be displaced to a different position with respect to the frame, whereafter by only lifting the spreader by lifting the part of the fastening member, the part of the fastening member is displaceable, relative to the frame, to an upwardly displaced other position, which is established by another stop mounted to the frame or by the displaced locking member.

According to the invention, the distribution member is movable into a position which is inclined with respect to the surface with a simple construction of the spreader, owing to which the spreader may be manufactured easier and cheaper as the known construction.

The fastening member may be a coupling member for connecting the spreader to a lifting arm of a three-point lifting device of the prime mover. A simple construction of the spreader is obtained if the or each part of the fastening member comprises a coupling arm, which is connected to the frame for movement about a pivotal axis. The locking element can be actuated in a very simple manner if it is pivotally mounted on the frame. For this purpose the locking element may be connected to a control member which can be actuated from the prime mover. The control member can be of a simple nature if the locking element is resiliently biassed towards one position. The control member can then be formed simply by a wire or other elongate flexible element.

According to another aspect of the present invention the fastening members are connected respectively to two upwardly extending frame plates which are spaced apart transversely of the spreader and are interconnected by a frame part, at least one of the fastening members being selectively movable into either one of at least two positions with respect to the frame, the frame plates and a supporting arm mounted on the frame part supporting a hopper.

An embodiment in which adjustment of the fastening member is facilitated in a practical manner is obtained when the spreader is provided with an upwardly adjustable auxiliary support which can be selectively placed in either one of at least two positions with respect to the frame.

In an advantageous embodiment, the frame plates, as viewed from the side, have a U-shaped form, the limbs of which are rearwardly directed with respect to the normal intended direction of operative travel, one limb lying above the other.

According to another aspect of the present invention the hopper is made from a single sheet by pressing.

For a better understanding of the present invention and to show how it may be carried into effect, reference will now be made, by way of example, to the accompanying drawings, in which:

Figure 1 is a front view of a spreader;
Figure 2 is a side view of the spreader of Figure 1, taken in the direction of the arrow II in Figure 1;
Figure 3 is a plan view, on a reduced scale, of the spreader of Figure 1;
Figure 4 is an enlarged sectional view taken on the line IV-IV in Figure 2;
Figure 5 shows on an enlarged scale part of the front view of Figure 1;

Figure 6 is a view taken in the direction of the arrow VI in Figure 5;

Figure 7 is a side view of a second embodiment of a spreader;

Figure 8 shows on an enlarged scale part of the side view of Figure 7;

Figure 9 is a sectional view taken on the line IX-IX in Figure 6;

Figure 10 shows an alternative construction for the part shown in Figure 8;

Figure 11 is a front view of a further alternative construction for a fastening member of the spreader; and

Figure 12 is a view taken in the direction of the arrow XII in Figure 11.

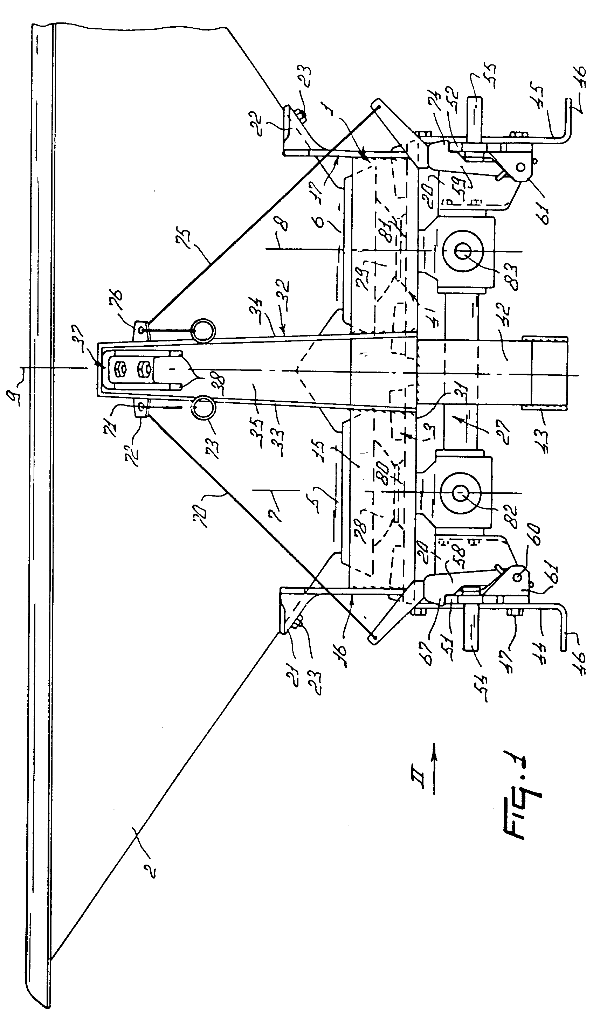

The spreader shown in Figures 1 to 6 comprises a frame 1, on which a hopper 2 is mounted. The spreader also comprises rotary distribution members 3 and 4 mounted on the frame below delivery spouts 5 and 6 of the hopper 2. The centrelines of the delivery spouts 5 and 6 coincide with upwardly extending rotary axes 7,8 of the distribution members. In the horizontal position of the device the rotary axes 7 and 8 are vertical.

The spreader is largely symmetrical about a central vertical plane 9 extending in the intended direction of operative travel of the spreader, as indicated by an arrow 24. The distribution members 3 and 4 are disposed one on each side of the plane 9. The rotary axes 7 and 8 of the distribution members lie in a plane 10 which is at right angles to the plane 9. The distribution members 3 and 4 are substantially identical to each other and they are at the same level as each other when the spreader is on level ground. The hopper 2 is pressed from a single sheet of material and as viewed on plan, it is rectangular. The delivery spouts 5 and 6 are round, as viewed on plan, and centred on the centrelines 7 and 8.

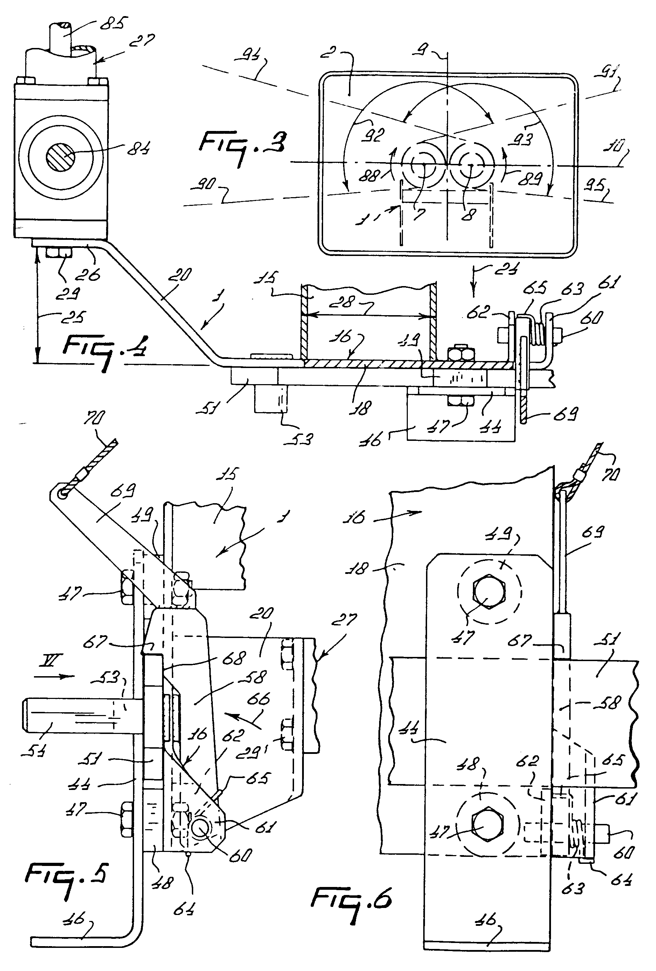

The frame 1 comprises a horizontal frame part in the form of a main frame beam 15, the ends of which are provided with upwardly extending frame plates 16 and 17. Each of the frame plates 16 and 17 has a middle part 18, an upper limb 19 and a lower limb 20 so that, as viewed from the side, these frame plates have the general shape of a U. With respect to the direction 24, the limbs 19 and 20 extend to the rear away from the middle part 18, the limb 19 lying above the limb 20. The upper limbs of the frame plates have respective parts 21 and 22 which are directed away from each other. These parts 21 and 22 serve as supporting members to which the hopper is fastened by bolts 23. The lower limbs 20 of the two frame plates 16 and 17 are offset in the direction towards each other by a distance 25 (Figure 4). The ends of the limbs 20 constitute coupling lugs 26. These lugs 26 are fixed by bolts 29 to opposite ends of a transmission box 27.

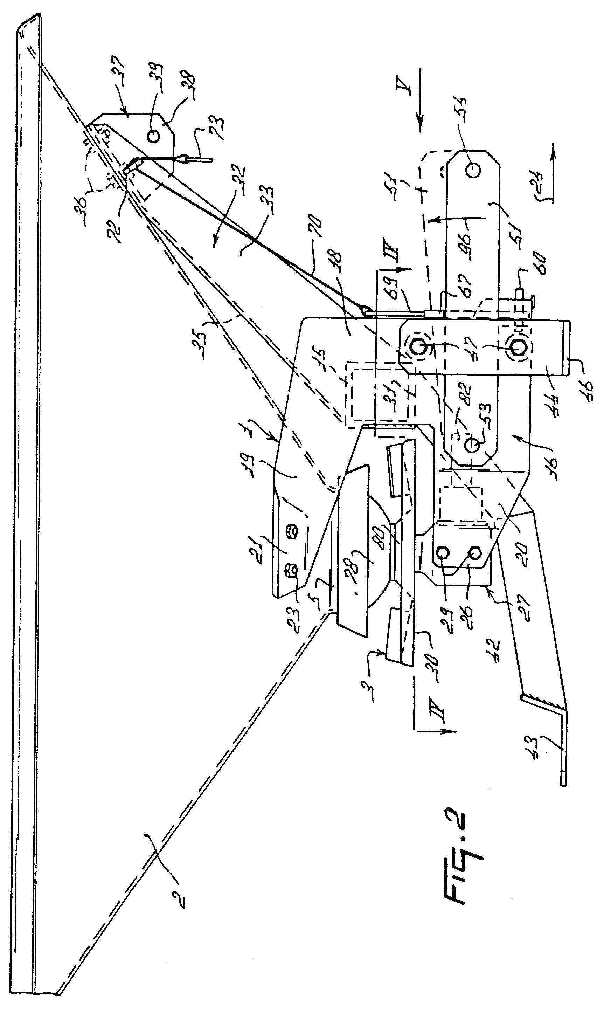

The main frame part 15 comprises a tubular member of square cross-section. The sides of the member have a length 28 of about 10 cms. The ends of the frame beam 15 meet the frame plates 16 and 17 near the rear edges of their middle parts 18. The main frame beam 15 is positioned so that it extends across the fronts of the distribution members 3 and 4. The undersides of the distribution members are coplanar with the underside 31 of the beam 15. When the spreader is horizontal, this common plane is horizontal. Near the middle, the beam 15 is provided with a supporting pillar 32 of U-shaped section having limbs 33 and 34 and a web 35. The web 35 of the supporting pillar 32 is bent over near the top end so that it is parallel to the front face of the hopper 2, to which it is fastened by bolts 36. The bolts 36 secure to the underside of the web 35 at the top of the supporting pillar 32 a U-shaped coupling member 37. The limbs 38 of this U-shaped member 37 have aligned holes 39. The supporting pillar 32 slopes upwardly and forwardly from the beam 15. The beam 15 is a short distance ahead of the distribution members 3 and 4 as is apparent from Figure 2.

A rear supporting leg 42 is secured to the underside of the beam 15, and slopes downwardly and rearwardly away from the beam 15. The leg 42 is sharply bent as is shown in Figure 2. The beam 42, like the beam 15, may be a tubular member of square cross-section. The supporting leg 42 and the supporting arm 32 are approximately in line with one another as shown in Figure 2. The rear end of the supporting leg 42 is provided with an angle-section lug 43, one limb of which is horizontal and serves as a supporting foot for the spreader. The plane 9 contains the centrelines of the supporting arm 32 and of the supporting leg 42.

At the front edge of each frame plate 16 and 17, on their outboard faces, there are provided front supporting legs 44 and 45 respectively, which have supporting feet 46 on their lower ends. These feet 46 are directed away from each other. As is shown in detail for the foot 44 in Figures 5 and 6 the feet are fastened by bolts 47 to the frame plate 16, spacer rings 48 and 49 being disposed between the plates and the supporting feet.

Fastening members 51 and 52 are disposed on the outboard faces of the frame plates 16 and 17. The fastening members 51 and 52 comprise elongate coupling plates, the long edges of which are parallel to the frame plates 16 and 17 and extend through the gaps between the frame plates and the supporting legs 44 and 45. The fastening members 51 and 52 are pivotally connected by pivot pins 43 to the frame plates. The pivot pins 53 of the fastening members 51 and 52 are in line with each other and the fastening members have identical shapes to each other, but they are disposed a mirror-image fashion with respect to the plane 9. The pivot pins 53 are disposed behind the supporting legs 44 and 45 respectively. The arms 51 and 52 extend forwardly from the pivot pins 53 to a position some distance ahead of the front edges of the frame plates. Near their front ends the arms 51 and 52 are provided with coupling pins 54 and 55 respectively, which are substantially perpendicularly below the coupling member 37. These coupling pins are in line with each other and extend laterally in opposite directions from the outboard faces of the arms 51 and 52.

Adjustable lock bolts 58 and 59 are provided near the front edges of the frame plates 16 and 17, at the level of the fastening members 51 and 52. These lock bolts 58 and 59 are in the form of pivotable lock arms and are disposed on the inboard sides of the frame plates 16 and 17. The locking arms 58 and 59 are disposed symmetrically with respect to each other about the plane 9. The construction of these locking arms will be described more fully for the locking arm 58 with reference to Figures 5 and 6. The locking arm 58 is pivotable about a pivot pin 60, which extends parallel to the direction 24. The pin 60 is mounted in a bent-over end portion 61 of the plate 16 and in a supporting lug 62 secured to the plate 16. The pivot pin 60 is surrounded by a spring 63, which bears at one end 64 on the frame plate 16. The other end 65 engages the locking arm 58 so that the locking arm 58 is biassed in the direction of the arrow 66 about the pivot pin 60. The locking arm 58 has a detent 67 and a supporting face 68. The locking arm 58 is provided with a draw arm 69 to which a control member 70, which in this embodiment is a cord, is connected. The cord extends from the draw arm 69 through an opening 71 in a lug 72 provided at the top of the supporting arm 32. The cord is provided with a ring 73 for gripping it. the locking arm 59 is not shown in detail because it has the same construction as the arm 58. The locking arm 59 has a detent 74 (Figure 1) and is provided with a cord 75 supported by a lug 76 situated on the other side of the supporting arm 32 from the lug 72.

The transmission casing 27 serves as a supporting member for the distribution members 3 and 4. The distribution members 3 and 4 are mounted on shafts 84 extending upwards from the casing 27, the centrelines of which shafts constitute the rotary axes 7 and 8. The shafts 84 are journalled in the transmission casing 27 in a manner which is not shown. Dosing members 78 and 79 are provided between the distribution members 3 and 4 and the delivery spouts 5 and 6 of the hopper. The dosing members 78 and 79 have a spherical shape (not shown in detail) and their top ends are movable below the lower ends of the spouts 5 and 6. The dosing members 78 and 79 bear on raised central parts 80 and 81 of the distribution members 3 and 4. The transmission casing 27 supports a shaft 85 in a manner which is not shown, this shaft being coupled with gear wheel transmissions situated below each of the distribution members and connected to the respective shafts of the distribution members 3 and 4. Input shafts 82 and 83 are connected to these gear wheel transmissions and the shafts to which the distribution members 3 and 4 are fastened constitute output shafts of the transmission casing 27.

For operation, the spreader is hitched to the three-point device of a prime mover, for example, a tractor. For this purpose the spreader has three coupling members formed by the U-shaped fastening member 37, which can be coupled to the top lifting arm of the tractor and by the arms 51 and 52 with the pins 54 and 55, which can be coupled to the lower lifting arms of the tractor. Either the shaft 82 or the shaft 83 is connected by an auxiliary shaft to the power take-off shaft of the tractor. The input shafts 82 and 83 are drivably connected to the shaft 85 by different transmission ratios so that the shafts 84 with the two distribution members can be driven optionally at either one of at least two different speeds.

During operation the distribution members 3 and 4 are rotated in the directions of the arrows 88 and 89 so that the adjacent sides of the distribution members move in the direction 24. During operation the material passes from the hopper 2 through the delivery spouts 5 and 6 to the distribution members 3 and 4. The flowrate of material from the hopper to the distribution members can be controlled by covering, to a greater or lesser extent, outlet ports (not shown) in the dosing members 78 and 79 by means of closing members. The shape and the rotary speed of the distribution members and the location of the outlet ports in the dosing members are chosen so that, during travel of the spreader, the two distribution members spread the material over the same strip of land as each other, extending for the same distance to both sides of the spreader in normal operation, during which the two distribution members are parallel to the surface to be covered. The distribution member 3 spreads the material between the boundary lines 90 and 91 in the angle 92, and the distribution member 4 spreads the material in the angle 93 between the boundary lines 94 and 95. The path of spread of one distribution members covers practically fully the path of spread of the other distribution member. When spreading over equal distances to both sides of the plane 9, the coupling arms 51 and 52 are horizontal when the spreader is horizontal. These arms are prevented from turning about the pivotal shafts 53 in the direction of the arrow 96 by the detents 67 and 74 of the lock bolts 58 and 59 respectively. The spreader can rest on the ground by means of the rear supporting foot 43 and the front supporting feet 46.

When the material is spread a distribution pattern is obtained in which the spreading density decreases towards the edges of the strip width. During the next spreading run the spreading width will at least partly overlap the spreading width of the preceding run so that a uniform distribution of the material is obtained. However, for a strip at the edge of a field, the decreasing density of spread towards the outer edge of the peripheral strip cannot be compensated for during the next spreading run. In order to avoid this disadvantage, the distribution members, at least, can be tilted with respect to the surface to be covered in a manner such that they slope downwardly towards the edge of the strip. In this embodiment the whole spreader is laterally tilted for this purpose. In this inclined position of the spreader the material will be spread with a uniform density from the spreader up to the edge of the peripheral strip.

For tilting the spreader, one of the fastening members 51 or 52 can be displaced upwardly or downwardly with respect to the frame so that the spreader is tilted although the relative positions of the lower lifting arms of the three-point lifting device are maintained. In order to obtain this tilted setting the spreader is put on the ground by lowering the arms of the lifting device until the supporting feet 43 and 46 rest on the ground and the arms 51 and 52 no longer bear on the detents 67 and 74 under the weight of the spreader. Then the locking pin 58 or 59 on the side towards which the distribution members are to slope downwardly is withdrawn by means of the cord 70 or 75 against the effrect of the spring 63 so that the detent 67 or 74 is moved away from its position above the top edge of the coupling arm 51 or 52 respectively. Subsequently, when the lower lifting arms of the lifting device are lifted, the coupling arm 51 or 52 from which the detent 67 or 74 has been withdrawn will turn about the pivot pin 53 until the top edge of the arm makes contact with the spacer sleeve 49. This spacer sleeve thus serves as a stop fixed to the frame. This position is indicated in Figure 2 by broken lines for the arm 51. When lifted, the spreader remains lower on the side where the coupling arm has turned upwards into contact with the stop 49 than on the other side. Thus the spreader is downwardly inclined with respect to the frame towards the side where the arm is moved upwards. Similarly the spreader can be tilted downwards towards the other side by operating the other locking pin. The relative positions of the detents 67 and 74 and the stops 49 is selected so that the spreader can be tilted at a desired angle of, for example, 5, 10 or 15°. By changing the vertical distance between the stops 49 and the respective detents 67 and 74 in the horizontal position of the spreader, the angle of inclination can be varied. To do this the stops 49 may be replaced by displaceable stops which can be arranged at will in any one of at least two positions on the frame. this displaceable stop may, for example, be a stop pin which can be inserted into any one of a plurality of holes at different heights in an adjusting plate concerned in order to vary the angle of inclination.

The spreader embodying the present invention has a simple structure in which the lock bolt 58 or 59 can be manually withdrawn by operation of the cord 70 or 75. This cord, serving as a control member, can be operated readily from the tractor or from another prime mover to which the spreader is hitched. When the spreader is to be returned to the horizontal position after a run in the inclined position, the spreader is dropped again to the ground and the coupling arm 51 or 52 which is released by its lock bolt 58 or 59 is moved downwards by the respective lifting arm of the lifting device until its top edge passes below the respective detent 67 or 74. The respective lock bolt 58 or 59 then returns to its locking position under the action of the spring 63. When subsequently the spreader is lifted it will be horizontal, as viewed in a transverse direction.

The construction of the frame of the illustrated spreader and the upwards and downwards movability of the coupling arms 51 and 52 with respect to the frame provide a very simple mechanism which allows the spreader to be tilted very easily. The spreader can be manufactured at very low cost also owing to the simple shape of the frame. It is also advantagaeous that the hopper can be made as a single integral part. The simple shape of the frame furthermore makes cleaning of the spreader a simple and quick operation.

The disposition of the main frame beam 15 in front of and at the same level as the distribution members 3 and 4 has the advantage that any material ejected forwardly by the distribution members strikes the beam 15 and cannot soil the prime mover of the spreader. Thus the frame beam 15 provides satisfactory protection against undesired scattering of the material without the need for a separate screening plate.

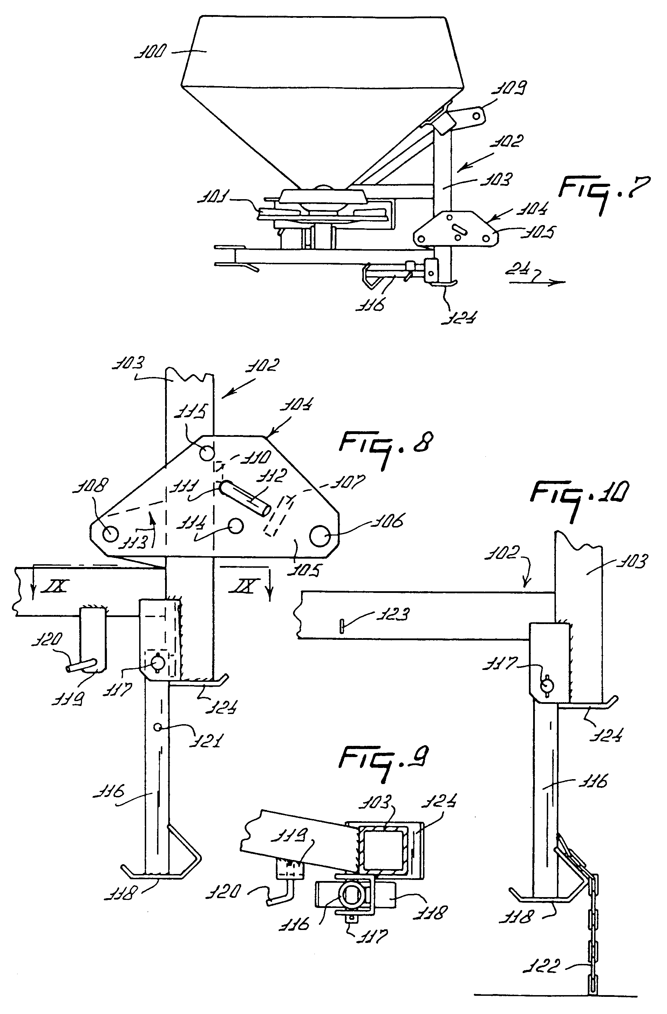

Figures 7 to 10 show an alternative embodiment, although in many respects it corresponds to that of Figures 1 to 6. The embodiment of Figures 7 to 9 comprises a hopper 100, distribution members 101 below the hopper and a frame 102. The frame has a different form from that of Figures 1 to 6 and comprises two vertical frame beams 103 which are spaced apart in a transverse direction. One of these frame beams 103 is provided with a fastening member 104 which is upwardly and downwardly displaceable and which is shown in detail in Figures 8 and 9. The fastening member 104 comprises two mutually parallel spaced plates 105, which are rigidly secured to each other by a pin 106 and a plate 107. The fastening member 104 is pivotally connected to the beam 103 by a pivotal shaft 108 situated behind the beam, with respect to the direction 24. The pivotal shaft 108, like the pivotal shaft 53, extends horizontally and transversely of the direction 24 when the spreader is horizontal. The fastening member 104 replaces one of the coupling arms 51 and 52 of Figures 1 to 6, and connected to a lower lifting arm of the lifting device of a tractor or a similar vehicle. On the other side of the spreader, a fastening arm is fastened to a frame beam corresponding to the frame beam 103. This fastening arm has a coupling pin in line with the pin 106. The frame 102 also has a coupling member 109.

When the spreader is put into use it is hitched, like the spreader of the preceding embodiment, to the three-point lifting device of a tractor or a similar vehicle. The coupling member 109 can be hitched to the top arm of the three-point lifting device, and the pin 106 and the corresponding pin on the other side of the spreader can be hitched to the lower lifting arms of the lifting device. For normal use the device is attached to the tractor in a manner such that the distribution members 101 are parallel to the surface to be covered. In this position an adjustable stop in the form of a pin 112 is passed through holes 111 in the plates 105 of the fastening member 104. The weight of the spreader biasses the fastening member 104 about the pivotal shaft 108 in the direction of the arrow 113, when the spreader is carried by the lifting device. Turning in the direction 113 is prevented by the pin 112, which comes into contact with a stop 110 rigidly secured to the front of the frame beam 103.

Like the previous embodiment, the spreader of Figures 7 to 9 can be transversely tilted with respect to the surface to be covered, even though the relative positions of the lower lifting arms of the lifting device of the tractor or similar vehicle are maintained. To achieve this, the pin 112 is withdrawn from the holes 111 and inserted instead, for example, into holes 114. When the spreader is lifted by the lifting device, the fastening member 104 can turn further in the direction of the arrow 113 about the pivot pin 108 until the pin 112 inserted into the holes 114 comes into contact with the fixed stop 110. The side of the spreader having the fastening member 104 is then lower than the other side so that the spreader is tilted towards the side having the fastening member 104.

The spreader can also be tilted downwardly towards the other side. To do this, the pin 112 is inserted into further holes 115. It will be obvious that the pin can be inserted into the holes 115 when the fastening member 104 has been turned out of the position shown in Figure 8 in the direction opposite the arrow 113 about the pivotal shaft 108 so that the holes 115 are located in front of the beam 103 beyond the stop 110. When the pin 112 is in the holes 115, the fastening member 104 can turn with respect to the frame in the direction of the arrow 113 until the pin 112 comes into contact with the stop 110. This will happen when the frame beam 103 and hence the rest of the frame 102 and the whole spreader are at a higher position on the side having the fastening member 104 than on the other side of the spreader. Thus the spreader is tilted in the opposite direction so that the distribution members are transversely tilted downwardly towards the other side. Thus the material can be spread obliquely downwards either to one side or to the other side in order to cover a peripheral strip of land on the left-hand or on the right-hand side of the surface to be covered. The material will thus be distributed from the spreader up to the edge of the peripheral strip with a uniform area density.

The spreader in the embodiment of Figures 7 to 9 comprises front supporting feet 124 at the lower ends of the vertical frame beams 103. As in the preceding embodiment, the spreader coupled with the lifting device can rest by these supporting feet 124 on the ground when the lower arms of the lifting device are dropped to a sufficient extent. In most tractors the lifting arms can be lowered to a distance of about 19 cms above the ground. In the embodiment shown in Figure 8 the coupling arm 104 can be displaced to a position below that shown in Figure 8 in order to permit insertion of the pin 112 into the holes 115. When the vertical distance between the supporting foot 124 and the pin 106 is too small and/or when the lifting arms cannot be lowered far enough to drop the pin 106 to a sufficiently lower level, the pin 112 can be inserted into the holes 115 only with great difficulty, for example, by unhitching the lifting device. In order to avoid this an auxiliary support 116 is provided in this embodiment at the lower end of the arm 103. This auxiliary support 116 is pivotally connected to the lower end of the beam 103 by a pivotal shaft 117 extending horizontally and transversely of the direction 24. The auxiliary support 116 comprises a supporting foot 118. When the auxiliary support 116 is in the position shown in Figure 8, the spreader when lowered will rest on the supporting foot 118. The supporting foot 118 is situated sufficiently far below the pin 106 to enable the pin 106 and hence the fastening member 104 to be turned downwardly with respect to the frame beam 103 far enough to bring the holes 115 in front of the beam 103 and free of the stop 110. The pin 112 can then be inserted into the holes 115 so that the spreader can be tilted simply with the aid of the lifting device of the tractor. When the auxiliary support 116 is not needed, it can be moved into a horizontal position as is shown in Figure 7. For this purpose, the frame 102 is provided with a lug 119 having an opening for receiving a pin 120, which can be inserted into a hole 121 in the auxiliary support 116. The auxiliary support 116 is only needed on that side of the spreader which has to be held at a higher level to move the displaceable fastening member 104 into the desired position. Therefore, the auxiliary support 116 is preferably situated near the member 104. It will be obvious that the construction shown in Figures 7 and 8 may also be used in the spreader shown in Figures 1 to 6. Then only one plate 16 or 17 need be provided with a fastening member. The distance between the holes 111,114,115 may be chosen so that the desired tilting adjustment can he ensured. In order to tilt the spreader by different angles, the number of holes in the fastening arm may be selected accordingly.

Figure 10 shows a construction in which the tongue 119 and the pin 120 are replaced by a chain 122 provided on the auxiliary support 116. This chain 122 can be used to retain the auxiliary support 116 in a horizontal position. A link of the chain 122 can be fitted over a hook 123 fastened to the frame 102. The length of the chain 122 may be such that its lower end just touches the ground when the distribution members 101 are lifted to the desired height above the ground. After tilting the spreader, the auxiliary support 116 with one chain 122 hanging down, can be returned to the correct working height. Then, if desired, the auxiliary support can be moved into a horizontal position by hooking one link of the chain 122 over the hook 123. The chain 122 can also be adjustably connected to the auxiliary support 116 in order to change the freely hanging length. This may be useful if it is necessary to adjust the height of the distribution members above the ground to different values.

Figures 1 to 6 show that the fastening members 51 and 52 are adjustable with respect to the frame about pivotal shafts 53, which are horizontal and extend transversely of the direction 24. The shafts 53 are then at right angles to the direction 24.

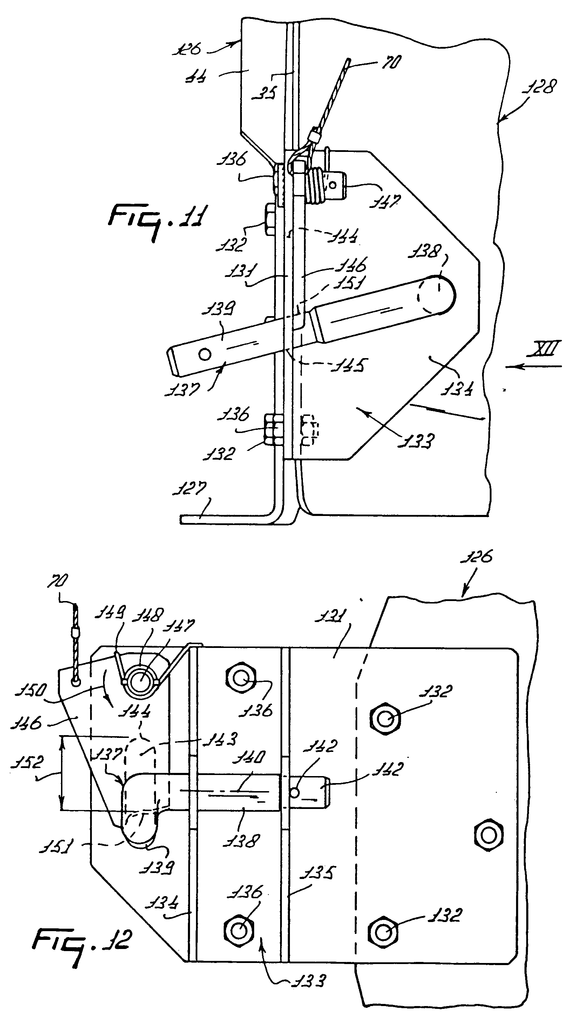

Figures 11 and 12 show another form of fastening members provided on a spreader which is otherwise similar to that shown in Figures 1 to 6, for hitching the spreader to the lower lifting arms of the three-point lifting device of a tractor or a similar vehicle.

Figures 11 and 12 show only one fastening member which is fastened to a side support 126 of a frame 128 similar to the frame 1, which support is comparable with the support 16 of Figurs 1 to 6. This support 126 has a foot 127 comparable with the foot 46. The fastening member shown in Figures 11 and 12 replaces the fastening member 51. The fastening member 52 is then replaced by a fastening member of the kind shown in Figures 11 and 12, the two fastening members being symmetrical with respect to the plane 9.

In this embodiment a support plate 131 is fastened to the inner side of the side support 126 by bolts 132. A U-shaped carrier 133 is fastened to the inner side of the carrying support 131 by bolts 136. The carrier 133 has limbs 134 and 135 with convergent edges. An arm 138 of a fastening member 137 is rotatably supported by the limbs 134 and 135. The fastening member 137 has an arm 139 at right angles to the arm 138. The arm 138 is parallel to the normal intended direction of operative travel of the spreader and its centre line 140 constitutes a pivotal axis for the fastening member 137. A narrower end 141 of the arm 138 extends through the hole in one of the limbs of the carrier 133 and the arm 138 is retained by a pin 142 against displacement in the limbs 134 and 134. The arm 139 extends through a slot 143 in the support plate 131. The slot has a top end 144 and a lower end 145, which ends serve as stops limiting the movement of the arm 139 about the axis 140.

The inner face of the carrying support 131 is provided with a lock bolt 146, which is pivotable about a pivotal shaft 147 rigidly secured to the carrying support 131. The shaft 147 is surrounded by a spring 148, one end 149 of which is in contact with the lock bolt 146 and exerts a force in the direction of the arrow 150 on the lock bolt about the pivotal shaft 147. The lock bolt 146 is provided on the underside with a detent 151, which may engage the top of the arm 139.

When the spreader is used, it is coupled to the lifting device in the same manner as described with reference to the preceding embodiment. Instead of the pins 54 and 55, the ends of the arms 139 of the fastening members 137 provided on the side supports 126 are coupled with the lower arms of the lifting device of the tractor. When the arms 139 of both fastening members are in the position shown in Figures 11 and 12, the spreader is not transversely inclined with respect to the tractor. The spreader can be tilted by moving upwards the arm 139 of one of the two fastening members with respect to the frame in a manner similar to that described with reference to Figures 1 to 6, in which at will either one of the pins 55 can be moved upwards with respect to the frame by releasing the lock bolts 58 or 59. In the embodiment of Figures 11 and 12 the lock bolt 146 with the detent 151 can be disengaged from the top of the arm 139 by pulling the cord 70. This an be done when the spreader is standing on the ground and the arm 139 is not pressed against the detent 151 by the weight of the spreader. When the lock bolt is disengaged and when the lower arms of the lifting device of the tractor are lifted, the arms 139 connected with the lower arms will move upwards. The arm 139 of which the detent 151 has been withdrawn from the top, then moves upwards about the pivotal axis 140 with respect to the frame 128 until it engages the end 144 of the slot 143. On the other side of the spreader the arm 139 will engage the lock bolt 146 and move the frame upwards so that the spreader will be transversely tilted behind the tractor. The angle of tilt depends upon how far the arm 139 turns about the pivotal shaft 140. In this embodiment each arm 139 can turn about the axis 140 until the top of the arm reaches the stop formed by the top end 144 of the slot 143. When the arm comes into contact with the stop 144, the spreader is raised with respect to the tractor in the inclined position determined by the position of the arm 139 by further lifting the arms 139 by means of the lower arms of the lifting device of the tractor. In the inclined position the spreader can be raised to a height above the ground as desired for spreading the material by means of the distribution members 3 and 4.

The arm 139 can be moved into the position shown in Figures 11 and 12 by lowering the spreader until it rests on the ground by the supporting feet 127, when, under the action of the spring 146, the released lock bolt 146 returns to the position shown in Figure 12. The detent 151 of the lock bolt will then lie above the top of the arm 139 so that the arm 139 is prevented from turning upwards about the shaft 140. In this position the bottom of the arm 139 is in contact with the end 145 of the slot 143 so that the arm 139 is fixed in the position shown in Figures 11 and 12.

It will be obvious that, in a similar manner to that described with reference to the preceding embodiments, the construction of Figures 11 and 12 can be used for spreading, as desired, on the left-hand or the right-hand side of the spreader uniformly over the width of a peripheral strip. In the embodiment of Figures 11 and 12, the extent of tilting can be chosen by varying the distance 152 between the end 144 and the detent 151 in the position shown in Figure 12. This distance determines the possible upward and downward angular turn of the arm 137 about the pivotal shaft 140. Preferably the spreader can be tilted so that it is at an angle of about 5° to about 20° at the most to the surface to be covered. Usually a tilt angle of about 7° to 10° is sufficient to cover a peripheral strip uniformly with material over a width to one side of the tractor equal to about half the distance over which the material is spread in normal operation towards said side.

## Claims

1.  A spreading device, hereinafter known as a spreader, for spreading material on a surface, comprising a frame (1) and at least one distribution member (3, 4) which is movable about an upwardly extending rotary axis (7, 8), the frame being provided with at least one fastening member (51, 52, 104, 137) for connecting the spreader to a prime mover and at least part of the fastening member (51, 53, 104, 137) being displaceable upwardly and downwardly with respect to the frame (1) for disposition in either one of at least two different positions with respect to the frame (1), whereby the distribution member (3, 4) is movable, by displacement of at least the part of the fastening member, into its position with respect to the surface to be covered by material spread by the spreader, characterized in that the distribution member is movable into a position in which it is inclined with respect to the surface to be covered with material to be spread by the spreader, and in that the part of the fastening member is restrictable in its upward movement relative to the frame by bearing against a locking element (58, 59, 146) mounted to the spreader so as to be movable with respect to the frame and to cooperate with the part of the fastening member for establishing at least one position of the fastening member (51, 52, 137) with respect to the frame and that the frame is provided with a foot (46, 118, 127) on which the spreader can be supported at least partly by the ground, so that the part of the fastening member is no longer bearing against the locking element, so that this locking element can be withdrawn from its cooperation with the part of the fastening member or can be displaced to a different position with respect to the frame whereafter by only lifting the spreader by lifting the part of the fastening member, the part of the fastening member is displaceable, relative to the frame, to an upwardly displaced other position, which is established by another stop (47, 144) mounted to the frame or by the displaced locking element.

2.  A spreader as claimed in claim 1, characterized in that the fastening member (51, 52, 104, 137) is a coupling member for hitching the spreader to a lifting arm of the three-point lifting device of the prime mover.

3. A spreader as claimed in claim 1 or 2, characterized in that two fastening members (51, 52, 104, 137) are provided, each of which is connectable to a lifting arm of the three-point lifting device of the prime mover, whereby the fastening members (51, 52, 104, 137) are mutually independently displaceable with respect to the frame (1).

4. A spreader as claimed in any one of the preceding claims, characterized in that the or each part of the fastening member (51, 52) comprises a coupling arm, which is connected to the frame (1) for movement about a pivotal axis (53, 140).

5. A spreader as claimed in any one of claims 1 to 4, characterized in that the fastening member (51, 52) extends movably between a frame part (16, 17) and a supporting leg (44, 45) which is fastened to the frame (1), the pivotal axis (53) of the fastening member (51, 52) being disposed behind the supporting leg (44, 45) and the locking element (58, 59) being disposed in front of the supporting leg (44, 45), with respect to the normal intended direction (24) of operative travel of the spreader.

6. A spreader, as claimed in any one of claims 1 to 5, characterized in that the fastening member (51, 52) comprises a flat arm which is pivotally mounted on a side support (16, 17) and is substantially parallel to the side support (16, 17), the arm (51, 52) being provided near its front end with a coupling pin (54, 55) for connection to a lower lifting arm of the lifting device of a tractor, the locking element (58, 59) being movable transversely of the direction (96) of movement of the arm (51, 52) about a pivotal axis (53) and being situated at a lower level than the arm (51, 52), the locking element (58, 59) having a detent (67, 74) for co-operation with the top of the arm (51, 52).

7. A spreader as claimed in any one of claims 1 to 4, characterized in that the fastening member (137) comprises a member having two mutually inclined portions (138, 139), one portion (139) of which extends transversely of the normal intended direction of operative travel and is connectible to a lower lifting arm of the prime mover, and the other portion (138) of which defines a pivotal axis (140) for the fastening member (137) and is journalled in a support (133) provided on the side support (126).

8. A spreader as claimed in claim 7, when appendant to claim 4, characterized in that the support (133) is a plate which is bolted to the side support (126) and is provided with the locking element (146) for co-operation with the fastening member (137), the locking element (146) being disposed parallel to the side support (126) and connected to the support (131) for movement about a pivotal axis (147) disposed at a higher level than the fastening member (137), the locking element (146) having a detent (151) for co-operation with the top of the fastening member (137), the said one portion (139) of the fastening member (137) extending through a slot (143) in the support plate (133), the top end (144) of the slot (143) constituting the fixed stop.

9. A spreader as claimed in any one of claims 4 to 8, characterized in that the movable locking element (58, 59, 146) is engaged by a spring (63, 148) which biasses the locking element towards an operative position in which the fastening member (51, 52, 137) is locked in position by the locking element (58, 59, 146).

10. A spreader as claimed in any one of the preceding claims, characterized in that the distribution member (3, 4) is one of two distribution members which are rotatable in opposite senses during operation.

11. A spreader as claimed in any one of the preceding claims characterized in that the fastening members (51, 52, 137) are mounted on plates (16, 17, 126) of the frame (1), the plates (16, 17, 126) being interconnected by a frame part (15), a hopper (2) being supported at least partly by the tops of the frame plates (16, 17, 126) and by a supporting arm (32) connected to the frame (1).

12. A spreader as claimed in claim 11, characterized in that the frame plates (16, 17) have rearwardly directed limbs (19, 20),as viewed from the side, one limb (19) being disposed above the other (20), whereby the frame part (15) adjoins at its ends the middle parts (18) of the two upwardly extending frame plates (16, 17).

13. A spreader as claimed in claim 11 or 12, characterized in that the supporting arm (32) is forwardly inclined from the frame part (15) and is connected to the hopper near its top end and that a rear supporting leg (42) is provided on the underside of the frame part (15), this rear supporting leg (42) being downwardly and rearwardly inclined from the frame part (15) and being provided at its lower end with a supporting foot (43),the supporting arm (32) and the rear supporting leg (42) being substantially aligned with each other, as viewed from the side.

14. A spreader as claimed in any one of the preceding claims, characterized in that the hopper (2) is made from a single sheet by pressing.

15. A spreader as claimed in any one of claims 11 to 14, characterized in that a transmission casing (27), on which at least one of the distribution member (3, 4) is disposed, is disposed between the frame plates (16, 17, 126), the transmission casing (27) accommodates two shafts (84) on which are mounted the two distribution members (3, 4) which are disposed side by side transversely of the normal intended direction (24) of operative travel of the spreader and which are situated below delivery spouts (5, 6) of the hopper (2), the transmission casing (27) has at least one input shaft (82, 83) and at least two output shafts (84) carrying at least two distribution members (3, 4).

16. A spreader as claimed in any one of the preceding claims, characterized in that an upwardly extending auxiliary support (116) is provided which can be disposed selectively in either one of at least two positions with respect to the frame (1), and the auxiliary support (116) is disposed near a fastening member (51, 52, 104, 137).

17. A spreader as claimed in any one of the preceding claims, characterized in that the frame (1) is provided with an adjusting element (122), by means of which the height of a distribution member (3, 4) above the ground can be set.

18. A spreader as claimed in any one of the preceding claims, characterized in that a dosing mechanism (80, 81) is provided between the distribution members (3, 4) and the hopper (2).

19. A spreader as claimed in claim 15, or in anyone of claims 16 to 18, when appendant to claim 15, characterized in that the transmission casing (27) can be coupled with the power take-off shaft of a tractor.

20. A method of adjusting the orientation of a spreader according to any one of the preceding claims hitched to a three-point lifting device of a tractor or like vehicle, characterized by the follwing steps:
    a. lowering the spreader, in a first orientation, to the ground until it is supported at least partly by the ground and until at least the part of the displaceable fastening member (51, 52, 104, 137) is no longer bearing against the locking element (58, 59, 112, 146) establishing the position of the part of the fastening member relative to the frame and therewith the first orientation of the spreader;
    b. withdrawing the locking element (58, 59, 112, 146) from cooperation with the fastening member (51, 52, 104, 137) or displacing the locking element (58, 59, 112, 146) to a different position;
    c. raising the spreader with the lifting device, whereby at least the part of the fastening member (51, 52, 104, 137) is displaced to a different position relative to the frame and whereby the spreader assumes a second orientation which is different from the first orientation.

**Revendications**

1. Dispositif d'épandage, ci-après désigné en tant qu'épandeur, pour épandre de la matière sur une surface, comprenant un chassis (1) et au moins un organe de distribution (3, 4) mobile autour d'un axe de rotation (7, 8) s'étendant vers le haut, le chassis étant muni d'au moins un organe de liaison (51, 52, 104,137) pour relier l'épandeur à une source de force motrice, et au moins une partie de l'organe de liaison pouvant être déplacée vers le haut et vers le bas par rapport au chassis (1) pour être disposée en l'une ou l'autre d'au moins deux positions différentes par rapport au chassis (1), en conséquence de quoi l'organe distributeur (3, 4) est mobile par déplacement d'au moins ladite partie de l'organe de liaison, pour venir en sa position par rapport à la surface à couvrir par la matière épandue par l'épandeur,

caractérisé en ce que l'organe distributeur est mobile pour venir en une position dans laquelle il est incliné par rapport à la surface à couvrir par la matière à épandre par l'épandeur, et en ce que la partie de l'organe de liaison peut être restreinte dans son mouvement vers le haut, par rapport au chassis, en butant contre un élément de verrouillage (58, 59, 146) monté sur l'épandeur de manière à être mobile par rapport au chassis et à coopérer avec la partie de l'organe de liaison pour établir au moins une position de l'organe de liaison (51, 52, 137) par rapport au chassis, et en ce que le chassis est muni d'un pied (46, 118, 127) sur lequel l'épandeur peut être supporté au moins partiellement par le sol, de telle sorte que la partie de l'organe de liaison ne bute plus contre l'élément de verrouillage, et de telle sorte que cet élément de verrouillage puisse être retiré de sa coopération avec la partie de liaison ou puisse être déplacé vers une position différente par rapport au chassis, après quoi, par le seul fait de soulever l'épandeur en soulevant la partie de l'organe de liaison, cette partie de l'organe de liaison pourra être déplacée par rapport au chassis, pour venir en une autre position déplacée vers le haut, qui est établie par une autre butée (47, 144) montée sur le chassis ou par l'élément de verrouillage ayant été déplacé.

2. Epandeur selon la revendication 1, caractérisé en ce que l'organe de liaison (51, 52, 104, 137) est un organe d'accouplement pour atteler l'épandeur à un bras de levage du dispositif de levage à trois points du tracteur ou autre.

3. Epandeur selon la revendication 1 ou 2, caractérisé en ce que deux organes de liaison (51, 52, 104, 137) sont prévus, chacun d'eux pouvant être relié à un bras de levage du dispositif de levage à trois points du tracteur, en conséquence de quoi les organes de liaison (51, 52, 104, 137) peuvent être déplacés indépendamment l'un de l'autre par rapport au chassis (1).

4. Epandeur selon l'une quelconque des revendications précédentes, caractérisé en ce que la partie, ou chaque partie, de l'organe de liaison (51, 52) comprend un bras d'accouplement qui est relié au chassis (1) en étant mobile autour d'un axe de pivotement (53, 140).

5. Epandeur selon l'une quelconque des revendications 1 à 4, caractérisé en ce que l'organe de liaison (51, 52) s'étend de manière mobile entre une partie (16, 17) du chassis et une jambe de support (44, 45) qui est fixée au chassis (1), l'axe de pivotement (53) de l'organe de liaison (51, 52) étant disposé derrière la jambe de support (44, 45), et l'élément de verrouillage (58, 59) étant disposé en avant de la jambe de support (44, 45) par rapport au sens normal de marche (24) prévu pour le travail de l'épandeur.

6. Epandeur selon l'une quelconque des revendications 1 à 5, caractérisé en ce que l'organe de liaison (51, 52) comprend un bras plat qui est monté pivotant sur un support latéral (16, 17) et qui est sensiblement parallèle au support latéral (16, 17), le bras (51, 52) étant muni, près de son extrémité antérieure, d'une cheville d'accouplement (54, 55) pour être relié à un bras inférieur de levage du dispositif de levage d'un tracteur, l'élément de verrouillage (58, 59) étant mobile transversalement au sens de mouvement (96) du bras (51, 52) autour d'un axe de pivotement (53) et étant situé à un niveau plus bas que le bras (51, 52), l'élément de verrouillage (58, 59) ayant une détente (67, 74) pour coopérer avec le sommet du bras (51, 52).

7. Epandeur selon l'une quelconque des revendications 1 à 4, caractérisé en ce que l'organe de liaison (137) comprend un organe ayant deux portions (138, 139) inclinées entre elles, une portion (139) de celui-ci s'étend transversalement au sens normal de marche prévu pour le travail et peut se relier à un bras inférieur de levage du tracteur , et l'autre portion (138) de celui-ci constitue un axe de pivotement (140) pour l'organe de liaison (137) et a pour palier un support (133) prévu sur le support latéral (126).

8. Epandeur selon la revendication 7, quand elle dépend de la revendication 4, caractérisé en ce que le support (133) est une plaque boulonnée sur le support latéral (126) et munie de l'élément de verrouillage (146) pour coopérer avec l'organe de liaison (137), l'élément de verrouillage (146) étant disposé parallèlement au support latéral (126) et relié au support (131) pour se mouvoir autour d'un axe de pivotement (147) disposé à un niveau plus haut que l'organe de liaison (137), l'élément de verrouillage (146) ayant une détente (151) pour coopérer avec le sommet de l'organe de liaison (137), ladite portion (139) de l'organe de liaison (137) s'étendant à travers une fente (143) dans la plaque de support (133), le sommet (144) de la fente(143) constituant la butée fixe.

9. Epandeur selon l'une quelconque des revendications 4 à 8, caractérisé en ce que l'élément mobile de verrouillage (58, 59, 146) est sollicité par un ressort (63, 148) qui l'entraîne vers une position de travail dans laquelle l'organe de liaison (51, 52, 137) est verrouillé en position par l'élément de verrouillage (58, 59, 146).

10. Epandeur selon l'une quelconque des revendications précédentes, caractérisé en ce que l'organe distributeur (3, 4) est un de deux organes distributeurs pouvant être entraînés en rotation dans des sens opposés au cours du travail.

11. Epandeur selon l'une quelconque des revendications précédentes, caractérisé en ce que les organes de liaison (51, 52, 137) sont montés sur des plaques (16, 17, 126) du chassis (1), les plaques (16, 17, 126) étant interconnectées par une partie (15) du chassis, une trémie (2) étant supportée au moins partiellement par les sommets des plaques (16, 17, 126) du chassis, et par un bras de support (32) relié au chassis (1).

12. Epandeur selon la revendication 11, caractérisé en ce que les plaques (16, 17) du chassis ont des branches (19, 20) dirigées vers l'arrière, en étant vues de côté, une branche (19) étant disposée au dessus de l'autre (20), de telle sorte que la partie (15) du chassis se joigne, à ses extrémités, aux parties médianes (18) des deux plaques (16, 17) du chassis qui s'étendent vers le haut.

13. Epandeur selon la revendication 11 ou 12, caractérisé en ce que le bras de support (32) est incliné vers l'avant à partir de la partie (15) du chassis et est relié à la trémie près de son extrémité supérieure, et en ce qu'une jambe postérieure de support (42) est prévue sur la face inférieure de la partie (15) du chassis, cette jambe postérieure de support (42) étant inclinée vers le bas et vers l'arrière à partir de la partie (15) du chassis et étant munie à son extrémité inférieure d'un pied de support (43), le bras de support (32) et la jambe postérieure de support (42) étant sensiblement alignées entre elles, en étant vues de côté.

14. Epandeur selon l'une quelconque des revendications précédentes, caractérisé en ce que la trémie (2) est réalisée à partir d'une seule feuille par pressaqe.

15. Epandeur selon l'une quelconque des revendications 11 à 14, caractérisé en ce qu'un carter de transmission (27) sur lequel est disposé au moins un des organes distributeurs (3, 4) est disposé entre les plaques (16, 17, 126) du chassis, le carter de transmission (27) loge deux arbres (84) sur lesquels sont montés les deux organes distributeur (3, 4) qui sont disposés côte-à-côte transversalement au sens normal de marche (24) prévu pour le travail de l'épandeur et qui sont situés en dessous de goulottes de décharge (5, 6) de la trémie (2), le carter de transmission (27) a au moins un arbre d'entrée (82, 83) et au moins deux arbres de sortie (84) portant au moins deux organes de distribution (3, 4).

16. Epandeur selon l'une quelconque des revendications précédentes, caractérisé en ce qu'un support auxiliaire (116) s'étendant vers le haut est prévu, en pouvant être disposé sélectivement dans l'une ou l'autre d'au moins deux positions par rapport au chassis (1), et le support auxiliaire (116) est disposé près d'un organe de liaison (51, 52, 104, 137).

17. Epandeur selon l'une quelconque des revendications précédentes, caractérisé en ce que le chassis (1) est muni d'un élément de réglage (122) au moyen duquel peut être réglée la hauteur d'un organe distributeur (3, 4) au dessus du sol.

18. Epandeur selon l'une quelconque des revendications précédentes, caractérisé en ce qu'un mécanisme doseur (80, 81) est prévu entre les organes de distribution (3, 4) et la trémie (2).

19. Epandeur selon la revendication 15, ou selon l'une quelconque des revendications 16 à 18, quand elles dépendent de la revendication 15, **caractérisé** en ce que le carter de transmission (27) peut être accouplé à l'arbre de prise de force d'un tracteur.

20. Procédé de réglage de l'orientation d'un épandeur selon l'une quelconque des revendications précédentes, attelé à un dispositif de levage à trois points d'un tracteur ou autre véhicule similaire, **caractérisé** par les opérations suivantes :
    a) abaissement de l'épandeur, dans une première orientation, jusqu'au sol jusqu'à ce qu'il soit supporté au moins partiellement par le sol et jusqu'à ce qu'au moins la partie de l'organe déplaçable de liaison (51, 52, 104, 137) ne porte plus contre l'élément de verrouillage (58, 59, 112, 146) établissant la position de la partie de l'organe de liaison par rapport au chassis, et de ce fait la première orientation de l'épandeur;
    b) retrait de l'élément de verrouillage (58, 59, 112, 146) hors de sa coopération avec l'organe de liaison (51, 52, 104, 137) ou déplacement de l'élément de verrouillage (58, 59, 112, 146) jusqu'en une position différente;
    c) levage de l'épandeur au moyen du dispositif de levage, de telle sorte qu'au moins la partie de l'organe de liaison (51, 52, 104, 137) soit déplacée jusqu'en une position différente par rapport au chassis et de telle sorte que l'épandeur prenne une deuxième orientation qui est différente de la première orientation.

**Patentansprüche**

1. Streuvorrichtung, im folgenden als Streuer bezeichnet, zum Ausstreuen von Material auf eine Fläche, mit einem Rahmen (1) und wenigstens einem Verteiler (3, 4), der um eine aufwärts gerichtete Drehachse (7, 8) bewegbar ist, wobei der Rahmen mit wenigstens einem Befestigungsglied (51, 52, 104, 137) zum Verbinden des Streuers mit einer Antriebsmaschine versehen ist und wenigstens ein Teil des Befestigungsgliedes (51, 53, 104, 137) zwecks Anordnung in einer von wenigstens zwei verschiedenen Positionen in bezug auf den Rahmen (1) aufwärts und abwärts verstellbar ist, wobei der Verteiler (3, 4) durch Verstellen wenigstens des Teiles des Befestigungsgliedes in seine Position relativ zu der Fläche zu bewegen ist, die von dem von dem Streuer ausgestreuten Material bedeckt werden soll, dadurch gekennzeichnet, daß der Verteiler in eine Position bewegbar ist, in der er geneigt zu der Fläche liegt, die mit von dem Streuer ausgestreutem Material zu bedecken ist, und daß der Teil des Befestigungsgliedes in seiner Aufwärtsbewegung relativ zu dem Rahmen dadurch begrenzt ist, daß er an einem Verriegelungselement (58, 59, 146) anliegt, das an dem Streuer derart angebracht ist, daß es in bezug auf den Rahmen bewegbar ist und mit dem Teil des Befestigungsgliedes zur Festlegung wenigstens einer Position des Befestigungsgliedes (51, 52, 137) in bezug auf den Rahmen zusammenwirkt, und daß der Rahmen mit einem Fuß (46, 118, 127) versehen ist, auf dem der Streuer wenigstens zum Teil gegen den Boden derart abzustützen ist, daß der Teil des Befestigungsgliedes nicht mehr an dem Verriegelungselement anliegt, wodurch dieses Verriegelungselement aus seiner Position, in der es mit dem Teil des Befestigungsgliedes zusammenwirkt, zurückgezogen oder in eine andere Position relativ zu dem Rahmen verstellt werden kann, wonach, lediglich durch Anheben des Streuers durch Anheben des Teiles des Befestigungsgliedes, der Teil des Befestigungsgliedes relativ zu dem Rahmen in eine in Aufwärtsrichtung verlagerte andere Position verstellbar ist, die durch einen an dem Rahmen angebrachten, weiteren Anschlag (47, 144) oder durch das verstellte Verriegelungselement bestimmt ist.

2. Streuer nach Anspruch 1, dadurch gekennzeichnet, daß das Befestigungsglied (51, 52, 104, 137) ein Kupplungselement zum Anbringen des Streuers an einen Hebearm der Dreipunkt-Hebevorrichtung der Antriebsmaschine ist.

3. Streuer nach Anspruch 1 oder 2, dadurch gekennzeichnet, daß zwei Befestigungsglieder (51, 52, 104, 137) vorgesehen sind, die jeweils mit einem Hebearm der Dreipunkt-Hebevorrichtung der Antriebsmaschine zu verbinden sind, wobei die Befestigungsglieder (51, 52, 104, 137) unabhängig voneinander in bezug auf den Rahmen (1) verstellbar sind.

4. Streuer nach einem der vorhergehenden Ansprüche, dadurch gekennzeichnet, daß der oder jeder Teil des Befestigungsgliedes (51, 52) einen Kupplungsarm aufweist, der mit dem Rahmen (1) um eine Schwenkachse (53, 140) beweglich verbunden ist.

5. Streuer nach einem der Ansprüche 1 bis 4, dadurch gekennzeichnet, daß sich das Befestigungsglied (51, 52) beweglich zwischen einem Rahmenteil (16, 17) und einem an dem Rahmen (1) befestigten Stützbein (44, 45) erstreckt, wobei die Schwenkachse (53) des Befestigungsgliedes (51, 52) hinter dem Stützbein (44, 45) und das Verriegelungselement (58, 59) vor dem Stützbein (44, 45) angeordnet ist, bezogen auf die Arbeitsrichtung (24) des Streuers.

6. Streuer nach einem der Ansprüche 1 bis 5, dadurch gekennzeichnet, daß das Befestigungsglied (51, 52) einen flachen Arm aufweist, der an einer seitlichen Stütze (16, 17) schwenkbar angebracht ist und im wesentlichen parallel zu der seitlichen Stütze (16, 17) verläuft, daß der Arm (51, 52) in der Nähe seines vorderen Endes mit einem Kupplungsstift (54, 55) zur Verbindung mit einem unteren Hebearm der Hebevorrichtung eines Schleppers versehen ist, daß das Verriegelungselement (58, 59) quer zu der Bewegungsrichtung (96) des Armes (51, 52) um eine Schwenkachse (53) beweglich und niedriger als der Arm (51, 52) angeordnet ist, und daß das Verriegelungselement (58, 59) eine Raste (67, 74) zum Zusammenwirken mit der Oberseite des Armes (51, 52) aufweist.

7. Streuer nach einem der Ansprüche 1 bis 4, dadurch gekennzeichnet, daß das Befestigungsglied (137) ein Element mit zwei zueinander winkligen Abschnitten 138, 139) aufweist, von denen der eine Abschnitt (139) quer zur Arbeitsrichtung liegt und mit einem unteren Hebearm der Antriebsmaschine verbindbar ist, und der andere Abschnitt (138) eine Schwenkachse (140) für das Befestigungsglied (137) bildet und in einer an der seitlichen Stütze (126) vorgesehenen Halterung (133) gelagert ist.

8. Streuer nach Anspruch 7, soweit von Anspruch 4 abhängig,
dadurch gekennzeichnet, daß die Halterung (133) eine Platte ist, die mit der seitlichen Stütze (126) verschraubt und mit einem Verriegelungselement (146) zum Zusammenwirken mit dem Befestigungsglied (137) versehen ist, daß das Verriegelungselement (146) parallel zu der seitlichen Stütze (126) angeordnet ist und mit der Halterung (131) um eine Schwenkachse (147) beweglich verbunden ist, die höher liegt als das Befestigungsglied (137), daß das Verriegelungselement (146) eine Raste (151) zum Zusammenwirken mit der Oberseite des Befestigungsgliedes (137) aufweist, und daß der eine Abschnitt (139) des Befestigungsgliedes (137) einen Schlitz (143) der Halterungsplatte (133) durchsetzt, wobei das obere Ende (144) des Schlitzes (143) den feststehenden Anschlag bildet.

9. Streuer nach einem der Ansprüche 4 bis 8,
dadurch gekennzeichnet, daß an dem beweglichen Verriegelungselement (58, 59, 146) eine Feder (63, 148) angreift, die das Verriegelungselement in Richtung auf eine Betriebsposition vorspannt, in der das Befestigungsglied (51, 52, 137) in seiner Position durch das Verriegelungselement (58, 59, 146) verriegelt ist.

10. Streuer nach einem der vorhergehenden Ansprüche,
dadurch gekennzeichnet, daß der Verteiler (3, 4) einer von zwei Verteilern ist, die im Betrieb gegensinnig rotieren.

11. Streuer nach einem der vorhergehenden Ansprüche,
dadurch gekennzeichnet, daß die Befestigungsglieder (51, 52, 137) an Platten (16, 17, 126) des Rahmens (1) angebracht sind, daß die Platten (16, 17, 126) durch ein Rahmenteil (15) miteinander verbunden sind, und daß ein Behälter (2) wenigstens teilweise auf den Oberseiten der Rahmenplatten (16, 17, 126) und durch einen mit dem Rahmen (1) verbundenen Tragarm (32) abgestützt ist.

12. Streuer nach Anspruch 11,
dadurch gekennzeichnet, daß die Rahmenplatten (16, 17) in Seitenansicht nach hinten gerichtete Arme (19, 20) aufweisen, von denen der eine Arm (19) über dem anderen Arm (20) angeordnet ist, wobei das Rahmenteil (15) an seinen Enden an die Mittelteile (18) der beiden sich nach oben erstreckenden Rahmenplatten (16, 17) angrenzt.

13. Streuer nach Anspruch 11 oder 12,
dadurch gekennzeichnet, daß der Tragarm (32) von dem Rahmenteil (15) aus nach vorne geneigt und mit dem Behälter nahe seinem oberen Ende verbunden ist, und daß an der Unterseite des Rahmenteiles (15) ein rückwärtiges Stützbein (42) vorgesehen ist, das von dem Rahmenteil (15) schräg nach unten und hinten verläuft und an seinem unteren Ende mit einem Stützfuß (43) versehen ist, wobei der Tragarm (32) und das rückwärtige Stützbein (42) in Seitenansicht im wesentlichen miteinander fluchten.

14. Streuer nach einem der vorhergehenden Ansprüche,
dadurch gekennzeichnet, daß der Behälter(2) aus einem einzigen Blechstück durch Pressen hergestellt ist.

15. Streuer nach einem der Ansprüche 11 bis 14,
dadurch gekennzeichnet, daß ein Getriebegehäuse (27), auf dem wenigstens einer der Verteiler (3, 4) angeordnet ist, zwischen den Rahmenplatten (16, 17, 126) angeordnet ist, daß in dem Getriebegehäuse (27) zwei Wellen (84) untergebracht sind, an denen die beiden Verteiler (3, 4) angebracht sind, die quer zu der Arbeitsrichtung (24) des Streuers seitlich nebeneinander angeordnet sind und sich unter Auslaßöffnungen (5, 6) des Behälters (2) befinden, wobei das Getriebegehäuse (27) wenigstens eine Eingangswelle (82, 83) sowie wenigstens zwei Ausgangswellen (84) enthält, welche wenigstens zwei Verteiler (3, 4) tragen.

16. Streuer nach einem der vorhergehenden Ansprüche,
dadurch gekennzeichnet, daß eine aufwärts gerichtete Hilfsstütze (116) vorgesehen ist, die wahlweise in einer von wenigstens zwei Positionen in bezug auf den Rahmen (1) anzuordnen ist, und daß die Hilfsstütze (116) in der Nähe eines Befestigungsgliedes (51, 52, 104, 137) angeordnet ist.

17. Streuer nach einem der vorhergehenden Ansprüche,

dadurch gekennzeichnet, daß der Rahmen (1) mit einem Stellelement (122) versehen ist, mit dem die Höhe eines Verteilers (3, 4) über dem Boden einstellbar ist.

18. Streuer nach einem der vorhergehenden Ansprüche,
dadurch gekennzeichnet, daß zwischen den Verteilern (3, 4) und dem Behälter (2) ein Dosiermechanismus (80, 81) vorgesehen ist.

19. Streuer nach Anspruch 15 oder einem der Ansprüche 16 bis 18, soweit von Anspruch 15 abhängig,
dadurch gekennzeichnet, daß das Getriebe (27) mit der Zapfwelle eines Schleppers zu kuppeln list.

20. Verfahren zum Einstellen der Ausrichtung eines Streuers nach einem der vorhergehenden Ansprüche, der an eine Dreipunkt-Hebevorrichtung eines Schleppers oder eines ähnlichen Fahrzeugs angeschlossen ist,
gekennzeichnet durch folgende Schritte:

a. Absenken des in einer ersten Ausrichtung befindlichen Streuers auf den Boden, bis der Streuer wenigstens teilweise auf dem Boden abgestützt ist und bis wenigstens ein Teil des verstellbaren Befestigungsgliedes (51, 52, 104, 137) nicht mehr an dem Verriegelungselement (58, 59, 112, 146) anliegt, das die Position des Teiles des Befestigungsgliedes relativ zu dem Rahmen und damit die erste Ausrichtung des Streuers bestimmt;

b. Zurückziehen des Verriegelungselementes (58, 59, 112, 146) aus der mit dem Befestigungsglied (51, 52, 104, 137) zusammenwirkenden Position oder Verstellen des Verriegelungselementes (58, 59, 112, 146) in eine andere Position;

c. Anheben des Streuers mittels der Hebevorrichtung, wodurch wenigstens der Teil des Befestigungsgliedes (51, 52, 104, 137) in eine andere Position relativ zu dem Rahmen umgestellt wird und wodurch der Streuer eine von der ersten Ausrichtung verschiedene, zweite Ausrichtung einnimmt.

FIG.1

Fig.2

FIG.3

FIG.4

FIG.5

FIG.6

FIG.7

FIG.8

FIG.9

FIG.10

FIG.11

FIG.12